# EUROPEAN PATENT SPECIFICATION

(11) **EP 4 205 901 B1**
(45) Date of publication and mention of the grant of the patent: **04.03.2026**
(21) Application number: 22215330.6
(22) Date of filing: 21.12.2022
(51) Int. Cl.: B23Q 17/24, B23Q 11/08

(54) **MACHINE FOR PROCESSING WORKPIECES COMPRISING AN INTERFACE DEVICE**
MASCHINE ZUR BEARBEITUNG VON WERKSTÜCKEN MIT EINER SCHNITTSTELLENEINRICHTUNG
MACHINE D'USINAGE DE PIÈCES COMPRENANT UN DISPOSITIF D'INTERFACE

(30) Priority: 30.12.2021 IT 202100033101
(43) Date of publication of application: 05.07.2023
(73) Proprietor: SCM Group S.p.A., 47921 Rimini (RN) (IT)
(72) Inventor: BALDAZZI, Fabrizio, 47921 RIMINI (RN) (IT)
(74) Representative: Tiburzi, Andrea

(56) References cited:
- EP-A1- 3 348 350
- WO-A1-2021/225584
- DE-A1- 102014 000 789
- KR-B1- 101 670 862
- KR-B1- 101 843 992
- US-A1- 2005 002 151
- US-A1- 2021 260 711

## Description

The present invention relates to a machine for processing wooden workpieces comprising an interface device.

In more detail, the invention relates to a machine for machining workpieces made of wood, glass, fiberglass, ceramic, plastic, metal, provided with an interface device of the said type, designed and realized, in particular, to provide information to an operator regarding the state of machine operation, but which can be used for any interface function with the operator.

In the following, the description will be directed to a machine for machining wooden workpieces equipped with an interface device with the operator, integrated in the frame of the machine, but it is clear that the same should not be considered limited to this specific use.

As is well known, currently the machines for machining wooden workpieces can be working centers, in which the workpiece is generally blocked on a supporting plane and various machining operations are carried out on the workpiece by means of a mobile working unit along three linear axes and rotating around one, two or three rotation axes.

Machines defined as "pass-through" machines are also known, in which the workpiece is machined while it is moved along an advancement direction and in which there is an entry station, a machining station, and an exit station.

Examples of such known machines are edge banding machines, molders, drillers, sanders, panel saws, squaring-edge banding machines, and the like.

Usually, the machining station is covered with a closed cover carter, so as to protect both the groups that carry out the machining and the operators located near the machine during operation.

Said known machines are also provided with interface devices with the operator, such as for example PC machines or crystal liquid *display of the* LCD-type *- Liquid Crystal Display,* through which the operator can control its operation in a limited way, i.e., only by entering the data or modifying the machining parameters. Document EP3348350 discloses a machine provided with an interface device.

It is clear that the known machines allow an operator to interact with the machine only by means of PC machines equipped with LCD or LED displays, or mobile devices.

LCD or LED displays work through the use of additional components to be illuminated, i.e., light-emitting diodes used as backlighting of the LCD display.

A machine according to the preamble of claim 1 is known from documents DE102014000789A1 and US2005/002151A1.

In light of the above, it is, therefore, an object of the present invention to provide a machine for machining wooden workpieces wherein an operator can interact by means of interface devices having multiple functions.

Another object of the invention is to provide a machine for machining wooden workpieces wherein it is possible to observe the state of working of the working groups even when the machines are covered by closed carter and directly on the worked workpiece.

According to the invention, there is provided a machine for working workpieces made in wood, glass, fiberglass, ceramic, plastic, metal, comprising a logic control unit comprising machining programs to be carried out on said workpieces, a base to support the machine on the ground, a working plane, coupled to said base, for supporting the workpieces, at least one working unit, provided with working tools, for working the workpieces, arranged above to working plane, or arranged below said working plane, a covering frame for the protection of said working unit, said machine comprising an interface device arranged in said covering frame and operationally connected to said logic control unit, the interface device being transparent in order to view the processing of said working unit, wherein said interface device comprises at least one camera capable of projecting images and/or information on said workpieces in AR - Augmented Reality mode.

Further according to an embodiment, said interface device is inserted in said covering frame.

Still according to an embodiment, said covering frame comprises a transparent wall, and said interface device is coupled to said transparent wall.

Further according to an embodiment, said interface device is provided with a connection module of the wireless type, for exchanging data and/or information with said logic control unit.

Still according to an embodiment, said interface device comprises at least one camera capable of monitoring the internal area of said covering frame in which the working takes place and capable of showing the working on said interface device.

Always according to an embodiment, said interface device is provided with a wireless type connection module, to exchange data and/or information, such as images or videos, with other remote machines and/or devices such as PC and/or mobile devices and/or or with servers cloud.

Preferably according to an embodiment, said interface device is a display-Interactive Touch, with T-OLED technology - Transparent Organic Light Emitting Device.

Further according to an embodiment, said interface device comprises an active portion configured to allow an operator to modify the working parameters of said machine such as setting and adjustment parameters of said at least one working unit.

The present invention will be now described, for illustrative but not limitative purposes, according to its preferred embodiments, with particular reference to the figures of the enclosed drawings, wherein:
figure 1 shows a perspective view of a first embodiment of the machine for machining wooden workpieces provided with an improved frame, object of the present invention, in which the machine is a working center;
figure 2 shows a perspective view of a second embodiment of the machine for machining wooden workpieces provided with an improved frame, object of the present invention, in which the machine is a sander; and
figure 3 shows a perspective view of a third embodiment of the machine for machining wooden workpieces provided with an improved frame, object of the present invention, in which the machine is a squaring-edge-banding machine.

In the various figures, similar parts will be indicated with the same reference numbers.

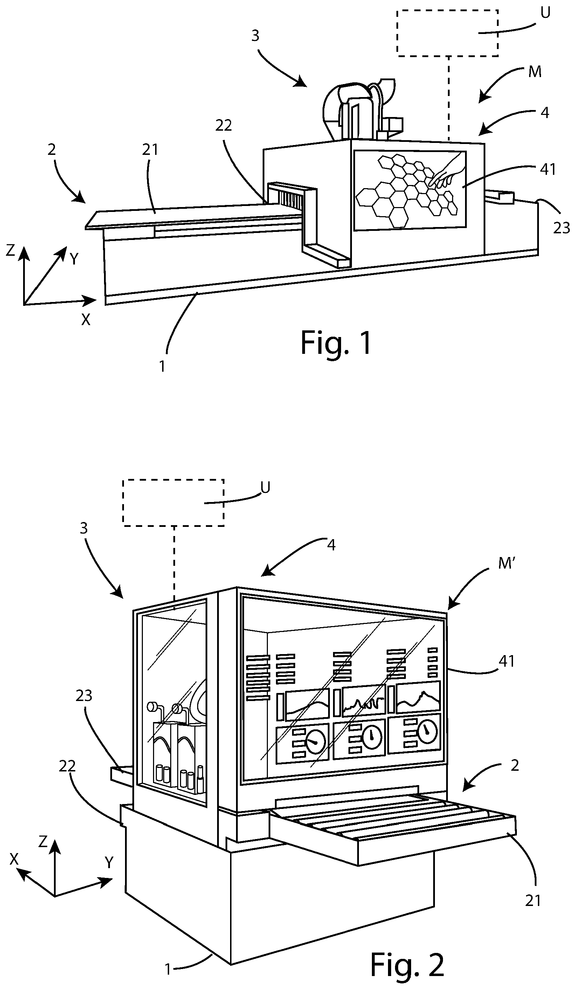

With reference to figure 1, the machine M for working workpieces made in wood, glass, fiberglass, ceramic, plastic, metal, provided with an improved frame, object of the present invention, essentially comprises a base 1 to support the machine M on the ground, a working plane 2, for supporting the workpieces to be machined, a working unit 3, provided with working tools for working the workpieces, a cover frame or carter 4, which covers said working unit 3, and a logic control unit U, containing the workpiece machining programs.

In this first embodiment, said machine M is a working center.

Said base 1 is capable of supporting said machine M for resting on the ground.

Said working plane 2 is arranged above said base 1 and extends along a first direction or development direction X.

Said working plane 2 comprises an entry portion 21, into which the workpiece to be machined is inserted, a working portion 22, in which the workpiece is machined by said working unit 3, and an exit portion 23, from which comes out the machined workpieces.

Said working unit 3 is capable of sliding along said working plane 2 to perform workpiece machining. Said machine M works in the known "pendulum" mode, therefore the entry portion 21, depending on the position of the working unit 3, can also be the working portion 22 or the exit portion 23, as well as the working portion 22 can be the entry portion 21 or exit portion 23, and the exit portion 23 can be entry portion 21 or the working portion 22.

Said cover frame or carter 4 covers said working unit 3 and, in the machine shown in figure 1, it is movable integrally with the working unit along the development direction X, in other types of machines it can be static.

A portion of said frame 4 comprises an interface device 41.

In particular, said interface device 41 is a part of the frame.

Said interface device 41 is a window of the cover carter 4, reinforced with transparent protective layers.

Alternatively, said interface device 41 is coupled to a window of the cover carter 4.

Said interface device 41 is transparent, and therefore allows an operator to see the operation of said working unit 3 during the machining of the workpieces.

Furthermore, said interface device 41 is capable of generating superimposed images on the workpieces.

Furthermore, according to the invention, said interface device 41 includes at least one camera capable of projecting, on the workpieces, images or symbols or writings, in a user interaction mode of the AR - Augmented Reality type.

Furthermore, said interface device 41 comprises at least one camera for monitoring the internal area of said cover frame 4, in which the matching takes place, and showing it on said interface device 41.

Said interface device 41 is capable of emitting its own light, therefore it can be made in different shapes and sizes.

Said interface device 41 is therefore light, flexible, it allows a wide viewing angle, approximately 90° from the normal straight line to the surface of the device itself, has high contrast, has a saturation of the colors, has a minimum response time, has black images regardless of brightness, has extremely low consumption, can be integrated with automatic operating temperature control and self-diagnostic systems.

Said interface device 41 comprises wireless connection modules, in particular Bluetooth^{®}, to exchange data and/or information, such as images and videos, with said logic control unit U and with other remote devices or with devices arranged in the plant, wherein said machine M is installed, for example, worn by operators, or with cloud units.

Said interface device 41 is a ITW - Interactive Touch-Windows display type, with T-OLED - Transparent Organic Light Emitting Device technology, i.e. transparent OLEDs, integrated into the windows of said cover carter 4 of said working unit 3.

Said interface device 41 comprises an active portion, i.e. of the touch screen type, configured to allow an operator to modify the operating parameters of said machine M, such as setting and adjustment parameters of said at least one working unit 3.

Said logic control unit U contains the working programs for said workpieces.

Said logic control unit U is also provided with communication means, such as a connection module of the wireless type, in particular *Bluetooth*^{®}*,* to exchange data and/or information, such as images or videos with remote users, such as assistance centers.

Furthermore, said logic control unit U is configured to send said data and/or information to wearable devices, and/or mobile devices, and/or desktop PCs.

Furthermore, said logic control unit U is configured to send said data and/or information to a remote cloud server, which in turn sends said signals to wearable devices, and/or mobile devices, and/or desktop PCs.

The operation of the machine M for working wooden workpieces provided with an interface device 41 described above is as follows.

When the machine M is machining wooden workpieces, the operator can view the operation of said working unit 3 through said transparent interface device 41.

Said interface device 41 also allows the operator to modify the operating parameters of the machine M.

Said interface device 41 exchanges data and/or information with other machines or sensors or devices present in the plant in which the machine M is installed.

Thus, it occurs constant feedback on machining and a continuous exchange of data and/or information between man-machine and machine-machine.

Furthermore, by means of said interface device 41, said machine M can learn from the experience and make autonomous decisions, redefining parameters, monitoring conditions, and predicting events.

It is also possible that said logic control unit U comprises control programs that also allow it to operate in multi-user mode, i.e., by allowing more users to simultaneously access to different navigation menus and choose their own customized contents and the information to be displayed, autonomously and independently, even in different languages.

For example, it is possible to insert in said logic control unit U dynamic customized menus, for collaborative applications by operators with different tasks, such as maintenance technicians, process/production managers, or to share or transfer various screens between devices or different screens.

Furthermore, since said interface device 41 is transparent, it is also possible to allow the operator to interact in augmented reality mode or AR-Augmented Reality mode, i.e., it is possible to show data and/or drawings and/or information on the workpieces being machined, in a complete superposition of the physical workpieces in transit in the machine M or static workpieces.

Furthermore, said interface device 41 allows several operators to share information, technological parameters related to the machining in progress, process information, working data, setting, and adjustment of the working units and/or used tools, to carry out adjustments, set-up, and regulation of the working groups, directly during the machining, without using auxiliary devices or accessories such as command buttons or touch-pad.

Furthermore, it is also possible to directly access into the machine M, and during the machining, to an internet browser or data and cloud resources, to acquire and use process information, technical data sheets, company maintenance services, service, spare parts, and the like.

It is also possible to directly interconnect several machines in line or of the same type, even separated from each other, to share data and/or technology and process information, for example, to control or regulate the working groups of a machine connected in series to the machine M, or be able to view, from the display of a working center of a certain department, the production data, efficiency or status of other machines of the same type, group, and department.

With reference to figure 2, in a second embodiment, the machine M' differs from the first embodiment described above solely in that said machine M' is a sander, in which the protective carter is fixed.

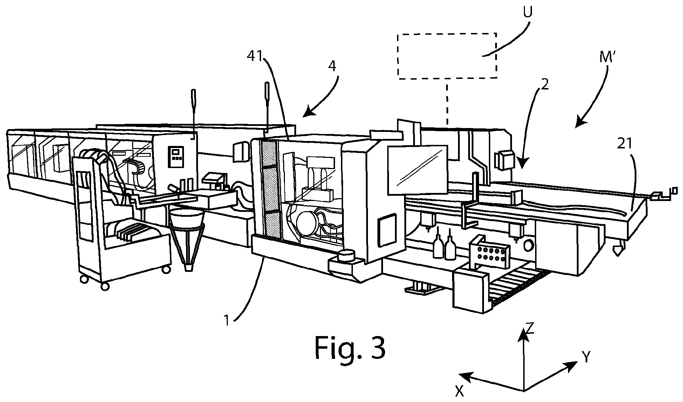

With reference to figure 3, in a third embodiment, the machine M" differs from the first embodiment described above solely in that said machine M" comprises a sequence of machines arranged in series with each other, like a squaring-edge-banding machine, in which a squaring and an edge banding machine are arranged in series with each other.

In particular, in the edge-bending machine shown in the figure, the protective carter is fixed.

As is evident from the description above, the machine object of the present invention allows an operator to visualize the working unit and to interact with the machine itself during the machining of the workpieces.

The present invention has been described for illustrative but non-limiting purposes, according to its preferred embodiments, but it is to be understood that modifications and/or changes can be introduced by those skilled in the art without departing from the relevant scope of protection, as defined by the enclosed claims.

In fact, the present invention can also be applied to machines not shown, such as, for example, molders, drilling machines, panel saws, working centers for the working of carpentry elements, painting machines, tenoning machines, working centers for the working of doors and windows

## Claims

1. Machine (M, M', M") for working workpieces made in wood, glass, fiberglass, ceramic, plastic, metal, comprising
a logic control unit (U) comprising machining programs to be carried out on said workpieces,
a base (1) to support the machine (M, M', M") on the ground,
a working plane (2), coupled to said base, for supporting the workpieces,
at least one working unit (3), provided with working tools, for working the workpieces, arranged above said working plane (2), or arranged below said working plane (2),
a covering frame (4) for the protection of said working unit (3),
an interface device (41) arranged in said covering frame (4) and operationally connected to said logic control unit (U), wherein said interface device (41) is transparent, in order to view the processing of said working unit (3),
said machine (M, M', M") being **characterized in that** said interface device (41) comprises at least one camera capable of projecting images and/or information on said workpieces in AR - Augmented Reality mode.

2. Machine (M, M', M") according to the preceding claim, **characterized in that** said interface device (41) is inserted in said covering frame (4).

3. Machine (M, M', M") according to claim 1, **characterized**
**in that** said covering frame (4) comprises a transparent wall, and
**in that** said interface device (41) is coupled to said transparent wall.

4. Machine (M, M', M") according to any one of the preceding claims, **characterized in that** said interface device (41) is provided with a connection module of the wireless type, to exchange data and/or information with said logic control unit (U).

5. Machine (M, M', M") according to any one of the preceding claims, **characterized in that** said interface device (41) comprises at least one camera capable of monitoring the internal area of said covering frame (4), in which the processing takes place and capable of showing the working on said interface device (41).

6. Machine (M, M', M") according to any one of the preceding claims, **characterized in that** said interface device (41) is provided with a wireless type connection module, to exchange data and/or information, such as images or videos, with other remote machines and/or devices such as PC and/or mobile devices and/or with servers cloud.

7. Machine (M, M', M") according to any one of the preceding claims, **characterized in that** said interface device (41) is a display - Interactive Touch, with T-OLED technology - Transparent Organic Light Emitting Device.

8. Machine (M, M', M") according to any one of the preceding claims, **characterized in that** said interface device (41) comprises an active portion configured to allow an operator to modify the working parameters of said machine (M, M', M") as setting and adjustment parameters of said at least one working unit (3).

## Patentansprüche

1. Maschine (M, M', M") zur Bearbeitung von Werkstücken aus Holz, Glas, Glasfaser, Keramik, Kunststoff, Metall, bestehend aus
eine logische Steuereinheit (U), die Bearbeitungsprogramme enthält, die an den Werkstücken auszuführen sind,
einen Sockel (1) zum Abstützen der Maschine (M, M', M") auf dem Boden,
eine mit der Basis verbundene Arbeitsebene (2) zum Tragen der Werkstücke,
mindestens eine mit Bearbeitungswerkzeugen versehene Bearbeitungseinheit (3) zur Bearbeitung der Werkstücke, die oberhalb der Bearbeitungsebene (2) oder unterhalb der Bearbeitungsebene (2) angeordnet ist,
einen Abdeckrahmen (4) zum Schutz der Arbeitseinheit (3),
eine Schnittstellenvorrichtung (41), die in dem Abdeckrahmen (4) angeordnet ist und mit der logischen Steuereinheit (U) verbunden ist, wobei die Schnittstellenvorrichtung (41) transparent ist, um die Verarbeitung der Arbeitseinheit (3) zu sehen,
wobei die Maschine (M, M', M") **dadurch gekennzeichnet ist, dass** die Schnittstellenvorrichtung (41) mindestens eine Kamera umfasst, die in der Lage ist, Bilder und/oder Informationen auf die Werkstücke im AR-Modus (Augmented Reality) zu projizieren.

2. Maschine (M, M', M") nach dem vorhergehenden Anspruch, **dadurch gekennzeichnet, dass** die Schnittstellenvorrichtung (41) in den Abdeckrahmen (4) eingesetzt ist.

3. Maschine (M, M', M") nach Anspruch 1, **dadurch gekennzeichnet**
**dass** der Abdeckrahmen (4) eine durchsichtige Wand aufweist, und
**dass** die Schnittstellenvorrichtung (41) mit der transparenten Wand verbunden ist.

4. Maschine (M, M', M") nach einem der vorhergehenden Ansprüche, **dadurch gekennzeichnet, dass** die Schnittstellenvorrichtung (41) mit einem Verbindungsmodul des drahtlosen Typs versehen ist, um Daten und/oder Informationen mit der logischen Steuereinheit (U) auszutauschen.

5. Maschine (M, M', M") nach einem der vorhergehenden Ansprüche, **dadurch gekennzeichnet, dass** die Schnittstellenvorrichtung (41) mindestens eine Kamera umfasst, die in der Lage ist, den Innenbereich des Abdeckrahmens (4), in dem die Bearbeitung stattfindet, zu überwachen und die Bearbeitung auf der Schnittstellenvorrichtung (41) anzuzeigen.

6. Maschine (M, M', M") nach einem der vorhergehenden Ansprüche, **dadurch gekennzeichnet, dass** die Schnittstellenvorrichtung (41) mit einem drahtlosen Verbindungsmodul versehen ist, um Daten und/oder Informationen, wie z.B. Bilder oder Videos, mit anderen entfernten Maschinen und/oder Geräten, wie z.B. PC und/oder mobilen Geräten und/oder mit Servern in der Cloud auszutauschen.

7. Maschine (M, M', M") nach einem der vorhergehenden Ansprüche, **dadurch gekennzeichnet, dass** die Schnittstellenvorrichtung (41) ein Display - Interactive Touch, mit T-OLED-Technologie - Transparent Organic Light Emitting Device - ist.

8. Maschine (M, M', M") nach einem der vorhergehenden Ansprüche, **dadurch gekennzeichnet, dass** die Schnittstellenvorrichtung (41) einen aktiven Teil umfasst, der so konfiguriert ist, dass er es einem Bediener ermöglicht, die Arbeitsparameter der Maschine (M, M', M") als Einstell- und Anpassungsparameter der mindestens einen Arbeitseinheit (3) zu ändern.

## Revendications

1. Machine (M, M', M") d'usinage de pièces en bois, verre, fibre de verre, céramique, plastique, métal, comprenant
une unité de commande logique (U) comprenant des programmes d'usinage à exécuter sur lesdites pièces, une base (1) pour soutenir la machine (M, M', M") sur le sol,
un plan de travail (2), couplé à ladite base, pour supporter les pièces à usiner,
au moins une unité de travail (3), équipée d'outils de travail, pour travailler les pièces, disposée au-dessus dudit plan de travail (2), ou disposée au-dessous dudit plan de travail (2),
un cadre de recouvrement (4) pour la protection de ladite unité de travail (3),
un dispositif d'interface (41) disposé dans ledit cadre de recouvrement (4) et connecté de manière opérationnelle à ladite unité de commande logique (U), dans lequel ledit dispositif d'interface (41) est transparent, afin de visualiser le traitement de ladite unité de travail (3),
ladite machine (M, M', M") étant **caractérisée en ce que** ledit dispositif d'interface (41) comprend au moins une caméra capable de projeter des images et/ou des informations sur lesdites pièces en mode AR - réalité augmentée.

2. Machine (M, M', M") selon la revendication précédente, **caractérisée en ce que** ledit dispositif d'interface (41) est inséré dans ledit cadre de recouvrement (4).

3. Machine (M, M', M") selon la revendication 1, **caractérisée en ce que**
ledit cadre de recouvrement (4) comprend une paroi transparente, et
**en ce que** ledit dispositif d'interface (41) est couplé à ladite paroi transparente.

4. Machine (M, M', M") selon l'une quelconque des revendications précédentes, **caractérisée en ce que** ledit dispositif d'interface (41) est pourvu d'un module de connexion de type sans fil, pour échanger des données et/ou des informations avec ladite unité de commande logique (U).

5. Machine (M, M', M") selon l'une quelconque des revendications précédentes, **caractérisée en ce que** ledit dispositif d'interface (41) comprend au moins une caméra capable de surveiller la zone interne dudit cadre de recouvrement (4), dans laquelle le traitement a lieu et capable de montrer le travail sur ledit dispositif d'interface (41).

6. Machine (M, M', M") selon l'une quelconque des revendications précédentes, **caractérisée en ce que** ledit dispositif d'interface (41) est doté d'un module de connexion de type sans fil, pour échanger des données et/ou des informations, telles que des images ou des vidéos, avec d'autres machines et/ou dispositifs distants tels que des PC et/ou des dispositifs mobiles et/ou avec des serveurs en nuage.

7. Machine (M, M', M") selon l'une quelconque des revendications précédentes, **caractérisée en ce que** ledit dispositif d'interface (41) est un écran - Tactile Interactif, de technologie T-OLED - Dispositif électroluminescent organique transparent.

8. Machine (M, M', M") selon l'une quelconque des revendications précédentes, **caractérisée en ce que** ledit dispositif d'interface (41) comprend une partie active configurée pour permettre à un opérateur de modifier les paramètres de travail de ladite machine (M, M', M") en tant que paramètres de réglage et d'ajustement de ladite au moins une unité de travail (3).
